# EUROPÄISCHE PATENTSCHRIFT

(11) **EP 3 759 778 B1**
(45) Veröffentlichungstag und Bekanntmachung des Hinweises auf die Patenterteilung: **14.06.2023**
(21) Anmeldenummer: 19720401.9
(22) Anmeldetag: 09.04.2019
(51) Int. Cl.: H02B 13/025

(54) **DRUCKENTLASTUNGSEINRICHTUNG SOWIE VERFAHREN ZUM BETRIEB EINER DRUCKENTLASTUNGSEINRICHTUNG**
PRESSURE RELIEF DEVICE AND OPERATING METHOD OF SUCH A DEVICE
DISPOSITIF DE DÉCHARGE DE PRESSION AINSI QU'UN PROCÉDÉ D'EXPLOITATION D'UN TEL DISPOSITIF

(30) Priorität: 27.04.2018 DE 102018206572
(43) Veröffentlichungstag der Anmeldung: 06.01.2021
(73) Patentinhaber: Siemens Energy Global GmbH & Co. KG, 81739 München (DE)
(72) Erfinder: ROSE-PÖTZSCH, Alexander, 16341 Panketal (DE); BRADLER, Christian, 14612 Berlin (DE); FEDTKE, Tom, 10969 Berlin (DE)
(86) Internationale Anmeldenummer: PCT/EP2019/058905
(87) Internationale Veröffentlichungsnummer: WO 2019/206618

(56) Entgegenhaltungen:
- DE-A1-102014 116 473
- DE-U- 7 508 952
- DE-U1- 7 731 384
- DE-U1- 8 108 217

## Beschreibung

Die Erfindung bezieht sich auf eine Druckentlastungseinrichtung mit einer eine Durchgängigkeit einer Druckentlastungsöffnung steuernden, relativ zur Druckentlastungsöffnung bewegbaren Druckentlastungswandung und auf ein Verfahren zum Betrieb einer Druckentlastungseinrichtung.

Es ist bekannt, an Druckentlastungsöffnungen eine bewegbare Druckentlastungswandung anzuordnen, wobei die Durchgängigkeit der Druckentlastungsöffnung durch eine Bewegung der bewegbaren Druckentlastungswandung relativ zur Druckentlastungsöffnung gesteuert wird. Derartige Druckentlastungseinrichtungen sind beispielsweise an Schaltanlagen, z. B. mit Schaltschränken im Einsatz, um beispielsweise im Störfall einen Überdruck durch die Druckentlastungsöffnung entweichen zu lassen. So soll eine größere Beschädigung verhindert werden. Oftmals steht im Vordergrund, einen möglichst raschen Druckabbau zu erzielen. Dabei kann es zu einem unerwünschten Bewegen der Druckentlastungswandung bzw. zu einem undefinierten Ausstoß von durch den Überdruck herausgeschleuderten Partikeln und Fluiden kommen.

Aus der DE 77 31 384 U1 ist ein Lichtbogen-fester Schaltschrank bekannt, bei dem in der oberen Schaltschrankabdeckung eine biegesteife mit Scharnieren versehene schwenkbare Druckentlastungsklappe eine Druckentlastungsöffnung bei Überdruck freigibt, wobei der Öffnungsweg durch einen Anschlag auf zentraler Klappentiefe begrenzt ist.

Aus der DE 10 2014 116473 A1 ist eine Lüftungsvorrichtung für eine Schottwand einer elektrischen Schaltanlage bekannt, bei der bei einer Druckwelle eine Abdeckklappe auf einer Seite der Schottwand einen ersten Durchströmungsquerschnitt verschließt und ein zweiter, größerer Durchströmungsquerschnitt sich mit umgekehrter Orientierung öffnet.

Aus der DE 81 08 217 U1 ist eine Anordnung zur Druckentlastung für die Innenräume gekapselter gasdichter Hochspannungs-Schaltanlagen bekannt, bei der bei Überdruck ein druckstabiler Deckel von einer in der Kapselungswandung angeordneten Druckentlastungsöffnung bis zu einem begrenzenden Anschlag abgeschwenkt wird.

Aus der DE 75 08 952 U ist eine allseitig geschlossene Schaltzelle mit einem auf dem Zellenkopf aufliegenden Deckblech, das sich bei Zellenüberdruck gegen einen Anschlag an seinem kurzen Ende schräg stellt und eine Druckentlastungsöffnung gegen die Zellenfront abschirmend frei gibt, bekannt.

Somit ergibt sich als Aufgabe der Erfindung eine Druckentlastungsöffnung derart zu gestalten, dass nach einem auslösenden Überdruckereignis die Unterbindung einer unerwünschten Bewegung der Druckentlastungswandung sichergestellt ist.

Erfindungsgemäß wird die Aufgabe bei einer Druckentlastungseinrichtung der eingangs genannten Art durch die Merkmale des Anspruchs 1 gelöst.

Eine Druckentlastungseinrichtung wird beispielsweise an Gehäusen, insbesondere an Gehäusen von Elektroenergieübertragungseinrichtungen wie Kapselungsgehäusen, Schaltschränken usw. eingesetzt, um im Innern gegebenenfalls auftretende Überdrücke rasch entspannen zu können und damit eine größere Zerstörungswirkung zu verhindern. Als solches kann eine Druckentlastungseinrichtung eine definierte Schwachstelle in einer Wandung ausbilden. Die Druckentlastungswandung überspannt dabei im Regelfall eine Druckentlastungsöffnung und verdämmt diese zu einem Großteil. Gegebenenfalls übernimmt die Druckentlastungswandung auch einen hermetischen Verschluss der Druckentlastungsöffnung. Bei einem Ansprechen der Druckentlastungseinrichtung kommt es zu einer Bewegung der Druckentlastungswandung relativ zur Druckentlastungsöffnung. Das heißt, die Verdämmung der Druckentlastungsöffnung durch die Druckentlastungswandung wird durch eine Relativbewegung zwischen Druckentlastungswandung und Druckentlastungsöffnung aufgehoben, wodurch ein Austreten von eine Druckbeaufschlagung verursachenden Fluiden, insbesondere Gasen, oder Partikeln ermöglicht wird. Die Druckentlastungswandung kann sich dabei beispielsweise reversibel verformen, irreversibel verformen, zerbersten, an Scharnieren befestigt usw. sein. Beispielsweise kann die Druckentlastungswandung an einer Seite der Druckentlastungsöffnung festgelegt sein und an einer anderen Seite der Druckentlastungsöffnung niedergehalten sein, beispielsweise durch einen Niederhalter. Es kann jedoch auch vorgesehen sein, dass die Druckentlastungswandung zur Erzeugung einer Relativbewegung zur Druckentlastungsöffnung einem Bersten unterworfen wird, so dass die Druckentlastungswandung unter Zerstörung derselben eine Relativbewegung zur Druckentlastungsöffnung vollzieht. Durch die Anordnung eines Anschlages in einer Bewegungsbahn der Druckentlastungswandung kann das Öffnen bzw. Freigeben der Druckentlastungsöffnung durch die Druckentlastungswandung von dem Anschlag beeinflusst werden. Es ist beispielsweise ein stufiges Freigeben der Druckentlastungsöffnung ermöglicht. Der Anschlag kann beispielsweise zumindest zeitweise einen Widerstand gegen eine Bewegung der Druckentlastungswandung aufbringen und gegebenenfalls unter Einwirkung derselben einer Formveränderung oder einer Zerstörung usw. unterzogen werden. Zumindest in der Zeit während des Wirksamwerden des Anschlages, d. h. innerhalb der Zeit, innerhalb welcher der Anschlag der Druckentlastungswandung einen mechanischen Widerstand entgegenbringt und diese beispielsweise abschnittsweise an einer weiteren Bewegung hindert, kann eine Richtwirkung für das austretende Fluid durch die Druckentlastungswandung selbst hervorgerufen werden. So ist es beispielsweise möglich, aus der Druckentlastungsöffnung austretendes Fluid oder Partikel umzulenken. Die Druckentlastungswandung, ebenso wie der Anschlag, kann als Deflektor wirken. So ist es beispielsweise möglich, einen Fluidstrom zunächst abzulenken und den Strömungsweg nach einem Austreten aus der Druckentlastungsöffnung zu verlängern und so beispielsweise ein Verwirbeln desselben mit der umgebenden Atmosphäre zu unterstützen. Beispielsweise kann eine Lenkung eines Fluides in unkritische Bereiche erfolgen. Bevorzugt sind Bediengänge und ähnliche Orte, an denen sich Menschen aufhalten können, vor einem Einwirken des austretenden Fluides zu schützen.

Erfindungsgemäss weist die Druckentlastungswandung einen ersten Schwenkpunkt auf, wobei ein zweiter Schwenkpunkt in der Druckentlastungswandung angeordnet ist.

Die Druckentlastungswandung weist einen ersten Schwenkpunkt auf, welcher beispielsweise durch eine Fixierung der Druckentlastungswandung in einem Randbereich der Druckentlastungsöffnung realisiert ist. Der Schwenkpunkt kann beispielsweise nach Art einer linear (gerade) verlaufenden Achse ausgerichtet sein, wobei die Druckentlastungseinrichtung beispielsweise ein Scharnier oder ein anderes Schwenkmittel aufweist, um ein wiederholtes Öffnen und Schließen der Druckentlastungsöffnung mittels der Druckentlastungswandung zu bewirken. Es kann jedoch auch vorgesehen sein, dass der Schwenkpunkt beispielsweise durch eine Perforation oder allgemein eine Formgebung der Druckentlastungswandung definiert wird, so dass ein vorgegebener erster Schwenkpunkt durch eine Biegekante gegeben ist. In der Druckentlastungswandung ist dann ein zweiter Schwenkpunkt angeordnet, wobei zunächst eine Bewegung der Druckentlastungswandung um den ersten Schwenkpunkt erfolgt und darauffolgend eine Bewegung der Druckentlastungswandung gegen den Anschlag erfolgt. Mit einem Berühren der Druckentlastungswandung am Anschlag wird ein zweiter Schwenkpunkt betätigt, um welchen die Druckentlastungswandung weiter zumindest abschnittsweise umgelenkt werden kann. Dabei ist sowohl am ersten Schwenkpunkt als auch am zweiten Schwenkpunkt eine Verformung der Druckentlastungswandung vorgenommen. Der erste Schwenkpunkt kann dabei für den zweiten Schwenkpunkt ein Widerlager bilden, um eine Umlenkung bzw. Umformung der Druckentlastungswandung um den zweiten Schwenkpunkt zu erzielen. So kann beispielsweise eine zweistufige Umformung an definierten Schwenkpunkten erfolgen. Bevorzugt liegt der zweite Schwenkpunkt in einem Abschnitt der Druckentlastungswandung, welcher mit einer Freigabe der Druckentlastungsöffnung bewegt wird. Bevorzugt kann eine parallele Ausrichtung der Schwerpunkte bei linearem Verlauf vorgesehen sein.

Vorteilhafterweise kann vorgesehen sein, dass der Anschlag von zumindest einem Führungselement für die Druckentlastungswandung getragen ist.

Führungselemente der Druckentlastungswandung werden eingesetzt, um ein Verkanten oder Verkippen der Druckentlastungswandung bei einer Bewegung zu verhindern. So ist es beispielsweise möglich, dass die Druckentlastungswandung um einen ersten Schwenkpunkt bzw. eine erste Schwenkachse bewegt wird, wobei eine Linearführung durch die Führungselemente gebildet ist. Diese stellen beispielsweise Flächen zur Verfügung, längs welcher die Druckentlastungswandung beispielsweise mit Stirnseiten entlangbewegt wird. Bei einem Verkanten der Druckentlastungswandung können die Führungselemente bzw. zumindest eines der Führungselemente abgetastet werden. Dadurch wird ein definiertes Anlenken der Druckentlastungswandung um einen ersten Schwenkpunkt erzeugt. Dies ist insbesondere von Vorteil, um ein definiertes Anlegen der Druckentlastungswandung an dem Anschlag zu erzielen. So kann eine Bewegung um den zweiten Schwenkpunkt in bevorzugter Form erfolgen. Bei einer idealen Bewegung kommt es zu keiner Berührung der Druckentlastungswandung mit einem Führungselement. Mit dem Kontaktieren des Anschlages kann dann eine weitere Schwenkbewegung um den zweiten Schwenkpunkt zumindest von Abschnitten der Druckentlastungswandung vorgenommen werden. Die Führungselemente sorgen dabei dafür, dass die Druckentlastungswandung bis zum Erreichen des Anschlages in einer definierten Form verformt wird, um dann anschließend um den Anschlag herum einer weiteren Umformung unterzogen zu werden. Bevorzugt können die Führungselemente geschlossene Flächen aufweisen, so dass diese alternativ oder zusätzlich eine Fluid führende Funktion übernehmen. Beispielsweise können die Führungselemente Teil eines Schachtes oder einer Haube etc. zur Führung eines Fluidstromes sein. Ein Schacht kann beispielsweise unter Nutzung eines flächigen Anschlages gebildet sein, wobei die Führungselemente eine seitliche Begrenzung vornehmen.

Dabei kann vorteilhaft vorgesehen sein, dass der Anschlag die Druckentlastungsöffnung zumindest teilweise überspannt.

Der Anschlag kann sich bevorzugt beabstandet zur Druckentlastungsöffnung zumindest teilweise über der Druckentlastungsöffnung erstrecken und so oberhalb der Ausstoßrichtung der Druckentlastungsöffnung verlaufen. Dadurch kann die Druckentlastungswandung in einfacher Weise gegen den Anschlag schlagen, um zunächst ein Beschleunigen derselben zu ermöglichen. Mit Erreichen des Anschlages kann ein Umformen der Druckentlastungswandung erfolgen. Bei der Nutzung von geschlossenen Wandungen für die Führungselemente, können diese eine Bewegung der Druckentlastungswandung führen, und/oder ein Führen eines Abgasstromes vornehmen. Dabei können in Wechselwirkung zwischen einem Führungselement und der Druckentlastungswandung bzw. des Anschlages winklige Deflektoren gebildet werden, um ein Richten von aus der Druckentlastungsöffnung austretenden Fluiden zu fördern. Damit kann eine Führung des Fluidstromes vorgenommen werden. Der Anschlag kann beispielsweise eine geschlossene Fläche aufweisen, so dass der Anschlag selbst auch einer Lenkung einer Fluidströmung dienen kann. Durch ein Überspannen der Druckentlastungsöffnung mittels des Anschlages ist es möglich, einerseits die Druckentlastungsöffnung mit ihrer Querschnittsfläche zu einem Abströmen eines druckbeaufschlagten Fluides zu nutzen, wobei bereits oberhalb der Druckentlastungsöffnung ein Ablenken von bevorzugt in einer vertikalen Richtung aus der Druckentlastungsöffnung austretenden Fluiden über den Anschlag bzw. die an dem Anschlag anschlagende Druckentlastungswandung ermöglicht ist. Insbesondere bei einer flächigen Ausgestaltung des Anschlages, d. h. z. B. in Form einer Wandung, welche zum Überspannen der Druckentlastungsöffnung in den Bereich oberhalb der Druckentlastungsöffnung hineinragt, kann unabhängig von der Lage bzw. dem Zustand der Druckentlastungswandung eine grundsätzliche Ausrichtung bzw. Richtungsbeeinflussung des ausströmenden Fluides erreicht werden. Beispielsweise kann sich eine Druckentlastungswandung flächig an einen flächigen Anschlag anschmiegen. Durch eine entsprechende Formgebung von Anschlag und Druckentlastungswandung kann die Druckentlastungswandung eine Vergrößerung der zum Ablenken von druckbelasteten Fluiden zur Verfügung stehenden Flächen dienen.

Eine weitere vorteilhafte Ausgestaltung kann vorsehen, dass der Anschlag eine im Wesentlichen lineare Anschlagkante aufweist.

Durch die Verwendung einer linearen (geraden) Anschlagkante am Anschlag ist ein Abschluss eines freien Endes des Anschlages ermöglicht. Die Anschlagkante kann beispielsweise zumindest teilweise die Druckentlastungsöffnung überspannen. Entsprechend wird so ein definierter Abschluss gebildet, um dort gegebenenfalls eine Abströmung des druckbeaufschlagten Gases zu erzielen bzw. auch eine definierte Bahn für einen zweiten Schwenkpunkt der Druckentlastungswandung zur Verfügung zu stellen. Die lineare Anschlagkante kann beispielsweise im Wesentlichen parallel zu einem linear verlaufenden Schwenkpunkt der Druckentlastungsrichtung ausgerichtet sein. Somit ist ein leichtes Ansprechen und bevorzugt definiertes Auslenken bzw. Verformen der Druckentlastungswandung unterstützt.

Weiterhin kann vorteilhaft vorgesehen sein, dass die Druckentlastungswandung eine Klappe mit linearer Bewegungsachse insbesondere Schwenkachse aufweist.

Eine lineare Bewegungsachse, insbesondere eine Schwenkachse, weist den Vorteil auf, dass die Klappe um diese Achse herum bewegbar ist und zumindest abschnittsweise eine rotative Bewegung ausführen kann. Dabei kann beispielsweise in der linearen Bewegungsachse ein Scharnier der Klappe angeordnet sein bzw. eine Biegeachse der Klappe vorgesehen sein. In der linearen Bewegungsachse kann ein erster Schwenkpunkt angeordnet sein. Entsprechend kann die Klappe beispielsweise bewegbar an einem Randbereich der Druckentlastungsöffnung anliegen. Um ein Ansprechverhalten der Klappe zu steuern, kann die Druckentlastungswandung beispielsweise mit Niederhaltern (Sicherungsmitteln) im Randbereich der Druckentlastungsöffnung gesichert werden. Die weiteren Befestigungsmittel (Niederhalter) können beispielsweise Sollbruchstellen aufweisende Bolzen, Klebestellen, Klemmverbindungen oder ähnliches sein, welche bei einer Druckbeaufschlagung zerstört oder aufgehoben (z. B. Klemmverbindungen) werden und so eine differenzdruckgetriebene Bewegung der Druckentlastungswandung freigeben.

Eine weitere vorteilhafte Ausgestaltung kann vorsehen, dass die Klappe sich zu einem Öffnen in Richtung einer Bedienfront eines Schaltschrankes bewegt.

Ein Schaltschrank dient der Aufnahme von elektrischen Einrichtungen wie beispielsweise Relais, Schütze, Steuerbaugruppen, Regel- und Automatisierungseinrichtungen, Kabeln, Leitungen, Schaltern, Erdungspunkten usw. Um eine im Schaltschrank befindliche Einrichtung zu bedienen, weist der Schaltschrank eine Bedienfront auf, von welcher aus auch eine Zugänglichkeit zum Innern des Schaltschrankes möglich ist. Eine Klappe kann sich bevorzugt in Richtung der Bedienfront bewegen, um die Druckentlastungsöffnung freizugeben. An einer Bedienfront kann z. B. ein Bediengang angeordnet sein, welcher durch Personen genutzt werden kann. Insbesondere in Kombination mit einem Anschlag kann so eine definierte Ablenkung bzw. Bewegung der Klappe erzeugt werden, so dass austretendes Fluid in bevorzugte Bereiche, beispielsweise in zentrale Bereiche oder in abseits gelegene Bereiche an einem Schaltschrank gelenkt werden, wodurch dort eine Entspannung des austretenden Fluides, beispielsweise durch eine Verwirbelung erzielt werden kann.

Eine weitere vorteilhafte Ausgestaltung kann vorsehen, dass die Druckentlastungswandung um einen Schwenkpunkt verformbar ist.

Um einen Schwenkpunkt herum kann eine Bewegung der Druckentlastungswandung bzw. zumindest von Teilen der Druckentlastungswandung vorgenommen werden. Ein Schwenkpunkt kann beispielsweise an einem Anschlag bzw. an einem Rand einer Druckentlastungsöffnung liegen, wodurch um den Schwenkpunkt herum ein Verformen, insbesondere ein Schwenken der Druckentlastungswandung, zumindest in Abschnitten derselben erzwungen werden kann. So kann beispielsweise in Abhängigkeit der Gestaltung der Druckentlastungswandung in einem Verformungsbereich das Ansprechverhalten sowie die Art der Verformung der Druckentlastungswandung gesteuert werden. Beispielsweise kann durch eine Materialschwächung entlang bestimmter Bahnen, beispielsweise entlang einer linearen Bahn, entlang zweier kreuzender Bahnen, ein Umformen bzw. Ausbauchen oder ähnliches, an der Druckentlastungswandung erzielt werden, wodurch bevorzugt eine Verformung zumindest von Abschnitten der Druckentlastungswandung unter einem Anlegen an den Anschlag erzielt werden kann. Dabei kann insbesondere nach einem Anschlagen der Druckentlastungswandung an dem Anschlag insbesondere um einen zweiten Schwenkpunkt eine plastische Verformung der Druckentlastungswandung erfolgen, wodurch eine formschlüssige Sicherung der Druckentlastungswandung am Anschlag erzielt werden kann. Damit ist ein spontanes Bewegen, z. B. ein Rückbewegen oder ein Schwingen oder Pendeln der Druckentlastungswandung nach einem Ansprechen derselben verhindert. Beispielsweise kann die plastische Verformung durch die druckbeaufschlagten Fluide hervorgerufen werden. Nach einer Verformung kann eine Anschlagkante des Anschlages zumindest teilweise von der Druckentlastungswandung überdeckt sein. Beispielsweise kann durch die Verformung der Druckentlastungswandung ein Haken um den Anschlag herum plastisch verformt ausgebildet werden, so dass ein Blockieren der Schwenkbewegung nahezu vollständig durch die plastisch verformte Druckentlastungswandung hervorgerufen wird. Die Druckentlastungswandung arbeitet selbstsichernd.

Eine weitere vorteilhafte Ausgestaltung kann vorsehen, dass ein Schaltschrank eine Druckentlastungseinrichtung aufweist.

Ein Schaltschrank weist ein Gehäuse auf, welches in seinem Innern einen Aufnahmeraum begrenzt. Der Aufnahmeraum ist von Wandungen des Gehäuses umgrenzt. In einer Wandung des Schaltschrankes ist eine Druckentlastungseinrichtung nach einer der vorstehenden Ausgestaltungen angeordnet. Bei der Wandung kann es sich um eine Außenwandung, eine Innenwandung, eine Wandung eines speziellen Fluidkanals oder ähnliches handeln. Bevorzugt kann die Druckentlastungseinrichtung dabei in einer im Wesentlichen waagerecht angeordneten Wandung des Schaltschrankes eingebaut werden. Bevorzugt kann es sich bei dieser waagerechten Wandung um eine Deckwandung des Gehäuses handeln, mittels welcher eine Grundfläche des Schaltschrankes überspannt ist. Dabei kann die Deckfläche auch von einer ebenen Formgebung abweichen und beispielsweise sattelartig oder ähnlich verlaufen. Der Schaltschrank kann beispielsweise metallische Wandungen aufweisen, wobei eine Fluiddichtigkeit des Schaltschrankes nicht zwangsweise notwendig ist. Der Schaltschrank braucht lediglich eine Strömungen dämmende Abdichtung, wobei bei einem zu großen Anstieg der Fluidströmung im Innern des Schaltschrankes ein Ansprechen der Druckentlastungseinrichtung vorzusehen ist.

Eine weitere Aufgabe der Erfindung ist die Angabe eines Verfahrens zum Betrieb einer Druckentlastungseinrichtung, das nach einem auslösenden Überdruckereignis sicherstellt, dass eine unerwünschte Bewegung der Druckentlastungswandung unterbleibt.

Dabei wird die weitere Aufgabe durch ein Verfahren mit den Merkmalen des Anspruchs 8 gelöst.

Innerhalb eines abgeschlossenen Aufnahmeraumes, beispielsweise an einem Schaltschrank, kann ein Überdruck auftreten, wobei der Überdruck im Verhältnis zur Umgebung bzw. bezüglich eines benachbarten weiteren Aufnahmeraumes als Differenzdruck definiert ist. Um ein unkontrolliertes Bersten des Aufnahmeraumes zu verhindern, kann mittels der Druckentlastungswandung ein Differenzdruck gegenüber einem Nachbarbereich, welcher über die Druckentlastungsöffnung verbindbar ist, abgebaut werden. Mit einem Auftreten eines Überdruckes schlägt die Druckentlastungswandung gegen einen Anschlag, wobei die Druckentlastungswandung sich am Anschlag anschmiegend zumindest abschnittsweise weiterbewegt wird. Dadurch ist die Möglichkeit gegeben, die Druckentlastungswandung zum Abschluss ihrer Bewegung am Anschlag zu sichern und ein gerichtetes Abziehen von Fluid durch die Druckentlastungsöffnung hindurch zu ermöglichen.

In vorteilhafter Ausgestaltung ist dabei vorgesehen, dass am Anschlag ein insbesondere plastisches Umformen der Druckentlastungswandung erfolgt.

Durch ein plastisches Umformen der Druckentlastungswandung am Anschlag wird der Anschlag mittels der Druckentlastungswandung zumindest abschnittsweise eingemantelt, wobei die Druckentlastungswandung bevorzugt am Anschlag anliegt und den Anschlag, insbesondere eine Anschlagkante umgreift. Durch ein plastisches Umformen wird so ein Sicherungshaken durch die umgeformten Abschnitte der Druckentlastungswandung selbst erzeugt.

Weiterhin ist vorteilhaft vorgesehen, dass durch das Umformen eine formschlüssige Sicherung der Druckentlastungswandung am Anschlag erfolgt.

Durch den Formschluss wird eine Hintergreifung des Anschlages bevorzugt durch Abschnitte der Druckentlastungswandung erzeugt, wodurch beispielsweise auch eine Anschlagkante zumindest abschnittsweise bevorzugt zu einem Großteil von der Druckentlastungswandung umgriffen/abgedeckt ist.

Im Folgenden wird ein Ausführungsbeispiel der Erfindung schematisch in einer Zeichnung gezeigt und nachfolgend näher beschrieben. Dabei zeigt die
- Figur 1: eine perspektivische Ansicht zweier Schaltschränke mit jeweils einer Druckentlastungseinrichtung; die
- Figur 2: eine vergrößerte Darstellung einer Druckentlastungseinrichtung, die
- Figur 3: einen Schnitt durch eine Druckentlastungseinrichtung mit zeitlicher Abfolge einer Relativbewegung.

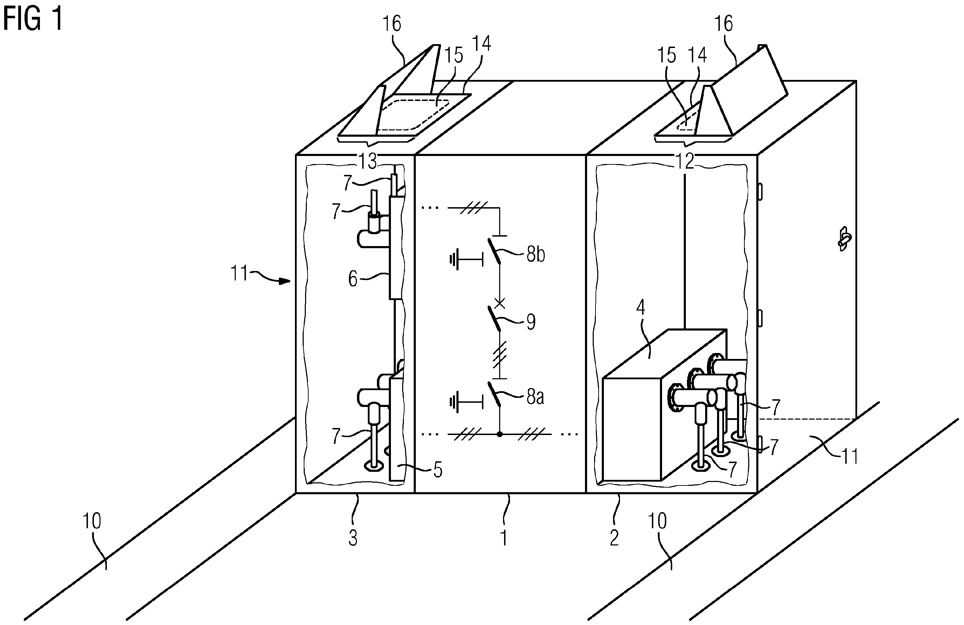

Die Figur 1 zeigt in einer perspektivischen Ansicht ein gasisoliertes Schaltfeld 1, welches ein Kapselungsgehäuse aufweist. Das Kapselungsgehäuse haust in seinem Inneren in einem Aufnahmeraum elektrische Schaltgeräte ein. Der Aufnahmeraum ist hermetisch von der Umgebung abgeschlossen und mit einem elektrisch isolierenden Fluid, z. B. einem Gas unter Überdruck gefüllt. Mantelseitig an entgegengesetzten Seiten des gasisolierten Schaltfeldes 1 sind ein erster Schaltschrank 2 sowie ein zweiter Schaltschrank 3 angeordnet. Während das Kapselungsgehäuse des gasisolierten Schaltfeldes 1 eine hermetische Einhausung eines Aufnahmeraumes ermöglicht, sind die Aufnahmeräume des ersten sowie des zweiten Schaltschrankes 2, 3 mit atmosphärischer Luft gefüllt, wobei eine Kommunikation der im Innern der beiden Schaltschränke 2, 3 befindlichen atmosphärischen Luft mit der Umgebung des gasisolierten Schaltfeldes 1 sowie des ersten und zweiten Schaltschrankes 2, 3 möglich ist. Beispielhaft sind in der Figur 1 das gasisolierte Schaltfeld 1, der erste Schaltschrank 2, der zweite Schaltschrank 3 jeweils mit einer kubischen Grundstruktur dargestellt. Darüber hinaus können auch abweichende Formgebungen Verwendung finden.

Am gasisolierten Schaltfeld 1 ragt eine erste Anformung 4 in den Aufnahmeraum des ersten Schaltschrankes 2 hinein. Weiter ragen eine zweite Anformung 5 sowie eine dritte Anformung 6 des gasisolierten Schaltfeldes 1 in den Aufnahmeraum des zweiten Schaltschrankes 3 hinein. Die Anformungen 4, 5, 6 dienen der Aufnahme von so genannten Steckverbindern mittels welchen Kabelanschlüsse 7 in das Innere des gasisolierten Schaltfeldes 1 eingeführt werden können. Die Steckverbinder bieten somit die Möglichkeit, einen Phasenleiter der jeweiligen Kabelanschlüsse 7 elektrisch isoliert durch eine Wandung des gasisolierten Schaltfeldes 1 in das Innere des gasisolierten Schaltfeldes hineinzuführen. Dabei können an den Kabelanschlüssen 7 formkomplementär zu den Steckverbindern ausgebildete Kabelstecker angeordnet sein. Vorliegend sind die Kabelstecker als Winkelstecker ausgebildet, so dass aus dem Bodenbereich der beiden Schaltschränke 2, 3 zunächst eine Zuführung von Kabelanschlüssen 7 zu den Steckverbindern der ersten Anformung 4 sowie der zweiten Anformung 5 ermöglicht ist. An der dritten Anformung 6 sind ebenfalls Steckverbinder angeordnet, mittels welcher entsprechende Kabelanschlüsse 7 mit gleichartigen Winkelsteckern elektrisch kontaktiert werden können.

Das Innere des gasisolierten Schaltfeldes 1 ist in der Figur 1 schematisch mit einem so genannten Single-Line-Diagramm dargestellt. Wie man erkennt, sind die in das Innere des gasisolierten Schaltfeldes 1 eingeführten Phasenleiter der Kabelanschlüsse 7, welche an der ersten Anformung 4 bzw. an der zweiten Anformung 5 befindlich sind, miteinander dauerhaft elektrisch leitend kontaktiert. Von dieser Verbindung erstreckt sich ein Stich über einen ersten Trennschalter 8a, einen Leistungsschalter 9 sowie einen zweiten Trennschalter 8b zu den Steckverbindern der dritten Anformung 6. Entsprechend ist über die erste Anformung 4 sowie die zweite Anformung 5 ein so genanntes Durchschleifen einer Kabelverbindung durch das gasisolierte Schaltfeld 1 ermöglicht, wobei das gasisolierte Schaltfeld 1 wiederum einen Stich aufweist, um einen Abgang zu einem weiteren Abnehmer oder zu einer Einspeisung auszubilden. Vorliegend sind die beiden Trennschalter 8a, 8b als so genannte Dreistellungstrenner ausgebildet, wodurch die Möglichkeit besteht, über die jeweils bewegbaren Schaltkontaktstücke der beiden Trennschalter 8a, 8b einen Erdungskontakt elektrisch leitend zu kontaktieren. Im Innern des gasisolierten Schaltfeldes 1 im dortigen Aufnahmeraum ist ein elektrisch isolierendes Fluid unter Überdruck angeordnet, beispielsweise kann es sich dabei um ein fluorhaltiges Gas wie Schwefelhexafluorid, ein Fluorketon, ein Fluornitril oder auch um gereinigte atmosphärische Luft sowie CO₂ und Gemischen mit diesen Stoffen handeln.

Auf den jeweils von dem gasisolierten Schaltfeld 1 abgewandten Seiten des ersten bzw. zweiten Schaltschrankes 2, 3 ist jeweils ein Bediengang 10 vor einer Bedienfront angeordnet. Über den Bediengang 10 können sich Personen dem ersten bzw. zweiten Schaltschrankes 2, 3 annähern. Dem jeweiligen Bediengang 10 zugewandt ist jeweils eine Öffnung am Schaltschrank 2, 3 angeordnet, die beispielsweise jeweils mittels einer Schranktür 11, verschließbar sind. Über die Schranktüren 11 ist ein Zugang zu den Aufnahmeräumen des ersten bzw. zweiten Schaltschrankes 2, 3 gegeben. Die Schranktüren 11 verschließen dabei die beiden Schaltschränke 2, 3 jeweils, wobei es sich nicht um einen hermetischen Verschluss des Schaltschrankes 2 bzw. des ersten bzw. zweiten Schaltschrankes 2, 3 handelt. Die innerhalb der Aufnahmeräume des ersten bzw. zweiten Schaltschrankes 2, 3 angeordneten Bauteile, beispielsweise die Kabelanschlüsse 7, die Kabelstecker oder die Steckverbinder usw. können eine Fehlfunktion aufweisen. Beispielsweise können Überspannungen an den Kabelanschlüssen 7 zu einer Zerstörung von Isolationsmaterialien der Kabelanschlüsse 7 führen. Es können beispielsweise Lichtbogenerscheinungen in den Aufnahmeräumen des ersten bzw. zweiten Schaltschrankes 2, 3 auftreten, wodurch im Innern des ersten bzw. zweiten Schaltschrankes 2, 3 beispielsweise aufgrund von Verdampfungserscheinungen von Metallen oder Isolierstoffen ein Überdruck entstehen kann. Um ein undefiniertes Bersten des ersten bzw. zweiten Schaltschrankes 2, 3 zu verhindern, ist am ersten Schaltschrank 2 eine erste Druckentlastungseinrichtung 12 und am zweiten Schaltschrank 3 eine zweite Druckentlastungseinrichtung 13 angeordnet. Die beiden Druckentlastungseinrichtungen 12, 13 sind im Wesentlichen gleichartig aufgebaut, wobei jede der Druckentlastungseinrichtungen 12, 13 jeweils eine Druckentlastungswandung 14 aufweist. Die jeweilige Druckentlastungswandung 14 verdämmt im regulären Betriebsfall eine Druckentlastungsöffnung 15. Die Druckentlastungsöffnungen 15 sind jeweils in Wandungen des jeweiligen Schaltschrankes 2, 3 eingebracht, welche die Grundfläche des jeweiligen Schaltschrankes 2, 3 überdecken. So ist eine Austrittsrichtung von Fluid durch die Druckentlastungsöffnung 15 in eine im Wesentlichen vertikale Richtung gegeben. Weiterhin weisen die beiden Druckentlastungseinrichtungen 12, 13 jeweils einen Anschlag 16 auf. Bedarfsweise kann auch eine fluiddichte Ausführung eines Schaltschrankes 2, 3 vorgesehen sein. In diesem Fall ist auch ein fluiddichter Verschluss der Druckentlastungsöffnung 15 durch die Druckentlastungswandung 14 vorzusehen.

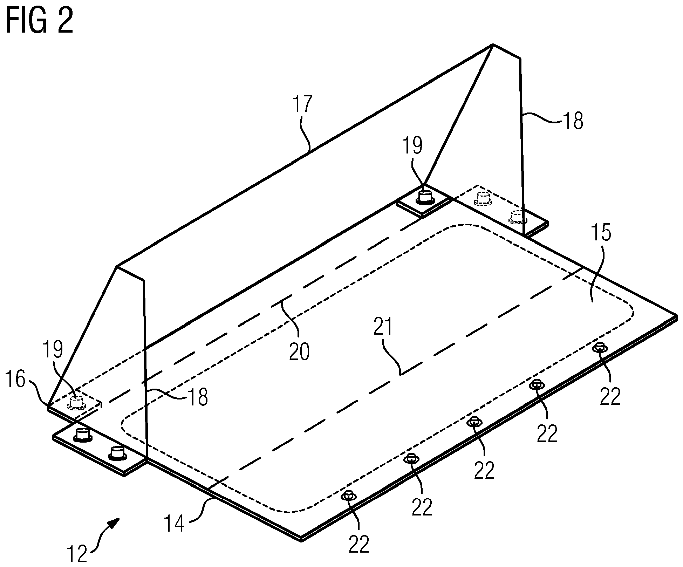

Aufbau und Wirkungsweise der Druckentlastungseinrichtungen 12, 13 wird im Folgenden anhand der ersten Druckentlastungseinrichtung 12 anhand der Figur 2 beispielhaft beschrieben. In der Figur 2 ist eine perspektivische Ansicht der ersten Druckentlastungseinrichtung 12 gezeigt. Dabei ist die Perspektive derart gewählt, dass aus einer vom Betrachter der Figur 1 abgewandten Richtung eine Abbildung der ersten Druckentlastungseinrichtung 12 in Figur 2 erfolgt. Die Druckentlastungsöffnung 15 weist einen im Wesentlichen rechteckigen Querschnitt auf, wobei hier beispielsweise eine Abrundung der Ecken der Druckentlastungsöffnung 15 vorgesehen ist. Der Querschnitt der Druckentlastungsöffnung 15 ist vollständig von der Druckentlastungswandung 14 überdeckt, so dass die Durchgängigkeit der Druckentlastungsöffnung 15 stark eingedämmt ist. Ein Verdämmen der Druckentlastungsöffnung 15 durch die jeweils zugehörigen Druckentlastungswandung 14 ist hier nicht in hermetisch abschließender Weise nötig. Die Druckentlastungswandung 14 ist dabei mit ihren rechteckigen Seiten jeweils parallel zu den rechteckigen Seiten der Druckentlastungsöffnung 15 angeordnet. Die Druckentlastungsöffnung 15 selbst bildet dabei einen Druckentlastungskanal. Es kann auch vorgesehen sein, dass eine erfindungsgemäße Druckentlastungseinrichtung in einem separaten Druckentlastungskanal angeordnet ist.

An einer Seite der Druckentlastungswandung 14, vorliegend an einer Längsseite der Druckentlastungswandung 14 ist ein Anschlag 16 angeordnet. Der Anschlag 16 weist eine gerade Anschlagkante 17 auf. Von der Anschlagkante 17 bis zu der Wandung des ersten Schaltschrankes 2, welcher den Anschlag 16 trägt, weist der Anschlag 16 eine im Wesentlichen ebene durchgehende Fläche auf. Dabei liegt der Anschlag 16 an einer Wandung des ersten Schaltschrankes 2 an und erstreckt sich schräg über die Druckentlastungsöffnung 15, so dass der Anschlag 16 die Druckentlastungsöffnung 15 überspannt. Insbesondere ist die Anschlagkante 17 beabstandet zur Druckentlastungsöffnung 15 oberhalb der Durchtrittsrichtung (hier vertikale Richtung) angeordnet. Um die Anschlagkante 17 zu stabilisieren sind flächig ausgeformte Führungselemente 18 mit dem Anschlag 16 verbunden. Die Führungselemente 18 bilden jeweils flächige Führungsflächen, welche sich beiderseits der Anschlagkante 17 erstrecken. So ist ein Abschattungsbereich (Haube, Schacht) geschaffen, welcher einerseits sich parallel zu einer Seite der Druckentlastungsöffnung 15 erstreckt und andererseits an den Enden der Druckentlastungswandung 14 eine seitliche (endseitige) Begrenzung und Stützung des Anschlages 16 ermöglicht. An den Führungselementen 18 des Anschlages 16 sind am Bodenbereich Laschen angeordnet, die ein Verschrauben des Anschlages 18 mit einer Wandung des ersten Schaltschrankes 2 sowie mit der Druckentlastungswandung 14 ermöglicht.

Im Abschattungsbereich des Anschlages 16 ist eine Befestigung der Druckentlastungswandung 14 hier vorliegend mittels zweier Bolzen 19 vorgesehen. Zwischen den Bolzen 19 erstreckt sich ein erster Schwenkpunkt 20 in Form einer Geraden. Parallel zum geraden bzw. linearen ersten Schwenkpunkt 20 ist ein zweiter Schwenkpunkt 21 vorgesehen. Der zweite Schwenkpunkt 21 liegt parallel zum ersten Schwenkpunkt 20 und liegt in der Fläche der Druckentlastungswandung 14. Bedarfsweise kann zur Unterstützung bzw. zur Ausprägung des ersten Schwenkpunktes 20 bzw. des zweiten Schwenkpunktes 21 eine Schwächung des Materials der Druckentlastungswandung 14 vorgesehen sein.

Um ein Lösen der Druckentlastungswandung 14 von dem ersten Schaltschrank 2 zu erschweren, ist eine Befestigung weiterer Abschnitte der Druckentlastungswandung 14 bevorzugt parallel zum Verlauf der Körperkanten der Druckentlastungsöffnung 15 mittels Sicherungsmitteln 22 (Niederhalter) vorsehbar. Die Sicherungsmittel 22 sind vorliegend Bolzen mit Sollbruchstellen, so dass bedarfsweise ein Lösen der Sicherungsmittel 22 in Abhängigkeit eines Überdruckes erfolgen kann.

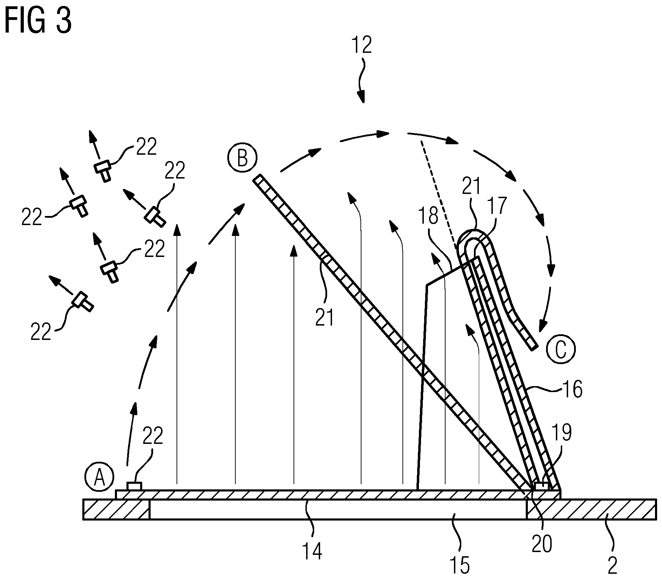

In der Figur 3 ist ein Schnitt durch die erste Druckentlastungseinrichtung 12 dargestellt, wie sie der Perspektive der Figur 1 entspricht. Dabei sind in der Figur 3 drei verschiedene Zeitpunkte Ⓐ, Ⓑ, Ⓒ, dargestellt, welche einen zeitlichen Ablauf eines Ansprechens der ersten Druckentlastungseinrichtung 12 abbilden. Zu einem neutralen Zeitpunkt Ⓐ, d. h. zu einem fehlerfreien Zeitpunkt, wie auch in den Figuren 1 und 2 dargestellt, ist die Druckentlastungswandung 14 über die Bolzen 19 bzw. die Sicherungsmittel 22, die Druckentlastungsöffnung 15 verdämmend, festgelegt. Der Anschlag 16 überspannt die Druckentlastungsöffnung 15, wobei die Führungselemente 18 beiderseits der Druckentlastungswandung 14 eine mechanische Stabilisierung ermöglichen. Zu einem Zeitpunkt eines Überdruckes im Innern des ersten Schaltschrankes 2, d. h. beispielsweise bei einem Auftreten eines Fehlers (z. B. Lichtbogen) in einem der Kabelanschlüsse 7 an der ersten Anformung 4 kann ein Überdruck auftreten, wobei ein Differenzdruck zwischen dem Aufnahmeraum des ersten Schaltschrankes 2 und der Umgebung des ersten Schaltschrankes 2 derart groß wird, dass die Sollbruchstellen der Sicherungsmittel 22 gelöst werden. Getrieben durch die Druckdifferenz, d. h. den Überdruck im Innern des Aufnahmeraumes wird die Druckentlastungswandung 14 der ersten Druckentlastungseinrichtung 12 um den ersten Schwenkpunkt 20 herum verschwenkt. Nach Art einer Klappe wird die Druckentlastungsöffnung 15 freigegeben. Das aus dem Aufnahmeraum ausströmende Fluid (z. B. von einem Lichtbogen expandiert) treibt die Druckentlastungswandung 14 weiter in Richtung des Anschlages 16 (von Position Ⓐ nach Ⓑ). Dabei wird die Bewegung bzw. Umformung der Druckentlastungswandung 14 längs des ersten Schwenkpunktes 20 durch die Führungselemente 18 beiderseits unterstützt. Gleichzeitig dienen die Führungselemente 18 aufgrund ihrer flächig geschlossenen Ausgestaltung der Führungsflächen 18 auch einem Lenken des ausströmenden Fluids. Das ausströmende Fluid drückt die Druckentlastungswandung 14 gegen den Anschlag 16, wobei der zweite Schwenkpunkt 21 zunächst im Bereich der Anschlagkante 17 des Anschlages 16 zur Ruhe kommt. Bevorzugt ist der zweite Schwenkpunkt 21 oberhalb der Anschlagkante 17 befindlich, so dass in einfacher Form das Fluid die Druckentlastungswandung 14 gegen den Anschlag 16 pressend, das freie Ende, welches nicht durch den Anschlag 16 der Druckentlastungswandung 14 unterstützt ist, weiterbewegt. Die Druckentlastungswandung 14 wird um den zweiten Schwenkpunkt 21 herum verformt, wobei diese Schwenkung bzw. das Ausbilden des zweiten Schwenkpunktes 21 durch die Anschlagkante 17 unterstützt wird. Die Druckentlastungswandung 14 legt sich um die Anschlagkante 17 herum und sichert durch eine plastische Verformung die Anlage der Druckentlastungswandung 14 an dem Anschlag 16 (Ⓒ). Die Druckentlastungswandung 14 vollzieht eine Schwenkbewegung nach Art einer Klappe, wobei die Klappe sich in Richtung des zugehörigen Bedienganges 10 hin bewegt. Durch den Anschlag 16 und die dran gesicherte Druckentlastungswandung 14 wird ein Ablenken des Fluids aus dem Innern des Aufnahmeraumes des ersten Schaltschrankes 2 von dem zugehörigen Bediengang 10 bewirkt. Unterstützt wird dies durch die Verformung der Druckentlastungswandung 14. Durch die Ummantelung des Anschlages 16 mit der verformten Druckentlastungswandung 14 erfolgt eine Vergrößerung bzw. eine Verlängerung der Leitwirkung des Anschlages 16 in Zusammenwirkung mit den Führungselementen 18.

Bedarfsweise kann auch vorgesehen sein, dass statt eines Umformens von Abschnitten der Druckentlastungswandung 14 entsprechende Scharniere an den bevorzugten Positionen zur Ausbildung von Schwenkpunkten 20, 21 angeordnet sind. Es kann auch vorgesehen sein, dass ein Bersten der Druckentlastungswandung 14 erfolgt, wobei gegebenenfalls durch eine Profilierung der Druckentlastungswandung 14 bevorzugte Berstwege vorgegeben sind. Bei einem Bersten verbleibt stets ein Restrisiko von undefinierten Berstdeformationen. Hier ist ein Lenken und Leiten von austretenden Fluiden bzw. von Abschnitten der Druckentlastungswandung 14 durch den Anschlag 16 bzw. die Anschlagkante 17 besonders wichtig.

## Patentansprüche

1. Druckentlastungseinrichtung (12, 13) mit einer eine Durchgängigkeit einer Druckentlastungsöffnung (15) steuernden, relativ zur Druckentlastungsöffnung (15) bewegbaren Druckentlastungswandung (14), bei der
in einer Bewegungsbahn der Druckentlastungswandung (14) ein Anschlag (16) angeordnet ist,
die Druckentlastungswandung (14) einen ersten Schwenkpunkt (20) aufweist, **dadurch gekennzeichnet, dass**
ein zweiter Schwenkpunkt (21) in der Druckentlastungswandung (14) angeordnet ist,
die Druckentlastungswandung (14) um einen Schwenkpunkt (20, 21) verformbar ist,
die Druckentlastungswandung (14) derart ausgebildet ist, dass bei Auftreten eines Überdruckes ein insbesondere plastisches Umformen der Druckentlastungswandung (14) am Anschlag (16) um den zweiten Schwenkpunkt (21) gegeben ist,
durch das Umformen eine formschlüssige Sicherung der Druckentlastungswandung (14) am Anschlag (16) gegeben ist.

2. Druckentlastungseinrichtung (12, 13) nach Anspruch 1,
**dadurch gekennzeichnet**, das s
der Anschlag (16) von zumindest einem Führungselement (18) für die Druckentlastungswandung (14) getragen ist.

3. Druckentlastungseinrichtung (12, 13) nach einem der Ansprüche 1 bis 2,
**dadurch gekennzeichnet**, das s
der Anschlag (16) die Druckentlastungsöffnung (15) zumindest teilweise überspannt.

4. Druckentlastungseinrichtung (12, 13) nach einem der Ansprüche 1 bis 3,
**dadurch gekennzeichnet**, das s
der Anschlag (16) eine im Wesentlichen lineare Anschlagkante (17) aufweist.

5. Druckentlastungseinrichtung (12, 13) nach einem der Ansprüche 1 bis 4,
**dadurch gekennzeichnet**, das s
die Druckentlastungswandung (14) eine Klappe mit linearer Bewegungsachse (20, 21) insbesondere Schwenkachse aufweist.

6. Druckentlastungseinrichtung (12, 13) nach Anspruch 5,
**dadurch gekennzeichnet**, das s
die Klappe geeignet ist, sich zu einem Öffnen in Richtung einer Bedienfront (10) eines Schaltschrankes (2, 3) zu bewegen.

7. Schaltschrank mit einer Druckentlastungseinrichtung (12, 13),
**dadurch gekennzeichnet**, das s
die Druckentlastungseinrichtung (12, 13) nach einem der Ansprüche 1 bis 6 ausgebildet ist.

8. Verfahren zum Betrieb einer Druckentlastungseinrichtung (12, 13) gemäß Anspruch 1,
welche eine Durchgängigkeit einer Druckentlastungsöffnung (15) mittels einer bewegbaren Druckentlastungswandung (14) steuert, demzufolge
bei Auftreten eines Überdruckes die Druckentlastungswandung (14) bewegt wird,
die Druckentlastungswandung (14) gegen einen Anschlag (16) anschlägt,
die Druckentlastungswandung (14) am Anschlag (16) anliegend zumindest abschnittsweise weiterbewegt wird,
am Anschlag (16) ein insbesondere plastisches Umformen der Druckentlastungswandung (14) erfolgt,
durch das Umformen eine formschlüssige Sicherung der Druckentlastungswandung (14) am Anschlag (16) erfolgt.

## Claims

1. Pressure release device (12, 13) having a pressure release wall (14) which controls a passability of a pressure release opening (15) and is movable relative to the pressure release opening (15), in which
a detent (16) is disposed in a motion path of the pressure release wall (14);
the pressure release wall (14) has a first pivot point (20), **characterized in that**
a second pivot point (21) is disposed in the pressure release wall (14);
the pressure release wall (14) is deformable about a pivot point (20, 21);
the pressure release wall (14) is configured in such a manner that, when overload pressure arises, in particular plastic forming of the pressure release wall (14) about the second pivot point (21) takes place on the detent (16);
securing the pressure release wall (14) in a form-fitting manner on the detent (16) takes place on account of the forming.

2. Pressure release device (12, 13) according to Claim 1,
**characterized in that**
the detent (16) is supported by at least one guide element (18) for the pressure release wall (14).

3. Pressure release device (12, 13) according to one of Claims 1 to 2,
**characterized in that**
the detent (16) at least partially straddles the pressure release opening (15).

4. Pressure release device (12, 13) according to one of Claims 1 to 3,
**characterized in that**
the detent (16) has a substantially linear detent edge (17).

5. Pressure release device (12, 13) according to one of Claims 1 to 4,
**characterized in that**
the pressure release wall (14) has a flap having a linear motion axis (20, 21), in particular a pivot axis.

6. Pressure release device (12, 13) according to Claim 5,
**characterized in that**
the flap for opening is suitable for moving in the direction of an operator panel (10) of an electrical cabinet (2, 3).

7. Electrical cabinet having a pressure release device (12, 13),
**characterized in that**
the pressure release device (12, 13) is configured according to one of Claims 1 to 6.

8. Method for operating a pressure release device (12, 13) according to Claim 1, which controls a passability of a pressure release opening (15) by means of a movable pressure release wall (14), consequently,
when overload pressure arises, the pressure release wall (14) is moved;
the pressure release wall (14) impacts a detent (16);
the pressure release wall (14) when bearing on the detent (16) is moved onward at least in portions;
in particular plastic forming of the pressure release wall (14) takes place on the detent (16);
securing the pressure release wall (14) in a form-fitting manner on the detent (16) takes place on account of the forming.

## Revendications

1. Dispositif (12, 13) de détente de la pression comprenant une paroi (14) de détente de la pression, commandant une possibilité de passage dans une ouverture (15) de détente de la pression et mobile par rapport à l'ouverture (15) de détente de la pression, dans lequel
une butée (16) est disposée dans un chemin de déplacement de la paroi (14) de détente de la pression,
la paroi (14) de détente de la pression a un premier point (20) de pivotement,
**caractérisé en ce que**
un deuxième point (21) de pivotement est disposé dans la paroi (14) de détente de la pression,
la paroi (14) de détente de la pression est déformable autour d'un point (20, 21) de pivotement,
la paroi (14) de détente de la pression est constituée de manière à avoir, à l'apparition d'une surpression, une déformation, notamment plastique, de la paroi (14) de détente de la pression à la butée (16) autour du deuxième point (21) de pivotement,
il est donnée, par la déformation, un arrêt à complémentarité de forme de la paroi (14) de détente de la pression à la butée (16).

2. Dispositif (12, 13) de détente de la pression suivant la revendication 1,
**caractérisé en ce que**
la butée (16) est portée par au moins un élément (18) de guidage de la paroi (14) de détente de la pression.

3. Dispositif (12, 13) de détente de la pression suivant l'une des revendications 1 à 2,
**caractérisé en ce que**
la butée (16) chevauche au moins en partie l'ouverture (15) de détente de la pression.

4. Dispositif (12, 13) de détente de la pression suivant l'une des revendications 1 à 3,
**caractérisé en ce que**
la butée (16) a un bord (17) de butée sensiblement linéaire.

5. Dispositif (12, 13) de détente de la pression suivant l'une des revendications 1 à 4,
**caractérisé en ce que**
la paroi (14) de détente de la pression a un volet ayant un axe (20, 21) de mouvement linéaire, notamment un axe de pivotement.

6. Dispositif (12, 13) de détente de la pression suivant la revendication 5,
**caractérisé en ce que**
le volet est propre à se déplacer pour une ouverture en direction d'un avant (10) de service d'une armoire (2, 3) de distribution.

7. Armoire de distribution ayant un dispositif (12, 13) de détente de la pression,
**caractérisée en ce que**
le dispositif (12, 13) de détente de la pression est constitué suivant l'une des revendications 1 à 6.

8. Procédé pour faire fonctionner un dispositif (12, 13) de détente de la pression suivant la revendication 1,
qui commande une possibilité de passage dans une ouverture (15) de détente de la pression au moyen d'une paroi (14) mobile de détente de la pression,
en déplaçant en conséquence, à l'apparition d'une surpression, la paroi (14) de détente de la pression,
la paroi (14) de détente de la pression butte sur une butée (16), on continue à déplacer au moins par endroits la paroi (14) de détente de la pression s'appliquant à la butée (16),
il se produit sur la butée (16) une déformation, notamment plastique, de la paroi (14) de détente de la pression,
par la déformation, il se produit un arrêt à complémentarité de forme de la paroi (14) de détente de la pression à la butée (16).
